# EUROPÄISCHE PATENTSCHRIFT

(11) **EP 0 841 352 B1**
(45) Veröffentlichungstag und Bekanntmachung des Hinweises auf die Patenterteilung: **17.09.2003**
(21) Anmeldenummer: 97119020.2
(22) Anmeldetag: 31.10.1997
(51) Int. Cl.: C08F 220/28, C08F 246/00, C09D 133/14

(54) **Verfahren zur Herstellung von Polyacrylatsekundär-dispersionen**
Process for preparing polyacrylate secondary-dispersions
Procédé de préparation de dispersions secondaires de polyacrylates

(30) Priorität: 12.11.1996 DE 19646586
(43) Veröffentlichungstag der Anmeldung: 13.05.1998
(73) Patentinhaber: BAYER AG, 51368 Leverkusen (DE)
(72) Erfinder: Hovestadt, Wieland, Dr., 47800 Krefeld (DE); Probst, Joachim, Dr., 51375 Leverkusen (DE); Blum, Harald, Dr., 51375 Leverkusen (DE); Irle, Christoph, Dr., 47800 Krefeld (DE); Sonntag, Michael, Dr., 51519 Odenthal (DE); Noble, Karl-Ludwig, Dr., 51467 Bergisch Gladbach (DE); Schelle, Roland, Dr., 06847 Dessau (DE)

(56) Entgegenhaltungen:
- EP-A- 0 225 612
- DE-A- 19 530 522

## Beschreibung

Die Erfindung betrifft ein Verfahren zur Herstellung von Polyacrylatsekundärdispersionen mit geringerem Colösergehalt ohne Destillationsschritt und deren Verwendung als Bindemittel oder Bindemittelkompomente in Beschichtungsmitteln.

Radikalische Polymerisationen von (Meth)acrylatmonomeren können technisch als Substanz-, Lösungs-, Fällungs-, Suspensions- oder Emulsionspolymerisation durchgeführt werden (vgl. z.B. H. G. Elias, Makromoleküle Bd. 1, S. 483 - 486, Hüthig & Wepf Verlag Basel, 5. Auflage 1990, B. Vollmert, Grundriss der makromolekularen Chemie, S. 95 - 107, Springer Verlag, Berlin 1962). Die Wahl des Polymerisationsverfahrens richtet sich nach der Wirtschaftlichkeit des Prozesses, den verfahrenstechnischen Gegebenheiten und den gewünschten Produkteigenschaften.

Radikalische Polymerisationen verlaufen exotherm, so daß die Wärme durch Kühlen abgeführt werden muß. Bei der Substanzpolymerisation ist diese Wärmeabführung in großen Mengen nur schwierig möglich, da die Viskosität mit steigendem Umsatz zunimmt und sich die Polymerisation selbst beschleunigen kann. Führt man die Polymerisation in einem Lösungsmittel, in dem sowohl die Monomere und das Polymer als auch der Initiator löslich sind, durch, so läßt sie sich einfacher beherrschen. Hierzu wird das Lösemittel in dem Polymerisationskessel vorgelegt und auf Polymerisationstemperatur erwärmt. Die Monomere und der Initiator werden parallel so langsam zudosiert, daß die Monomer- und Radikalkonzentration in der Lösung während der gesamten Polymerisation nur gering sind. Die Menge des Lösemittels wird daher so gewählt, daß die Polymerisationslösung sowohl zu Beginn (minimale Füllhöhe aufgrund der Kesselgeometrie) als auch bei vollständigem Umsatz (zunehmende Viskosität) noch rührund kühlbar ist. Bei der Herstellung von Poly(meth)acrylaten als Bindemittel oder Bindemittelkomponente in Beschichtungsmitteln auf Lösemittelbasis wird das Lösemittel für die Polymerisation so gewählt, daß es als Lacklösemittel im Bindemittel verbleiben kann.

Poly(meth)acrylatsekundärdispersionen als Bindemittel oder Bindemittelkomponente in Beschichtungsmittel auf Wasserbasis werden zweistufig hergestellt. In einem Schritt wird die Polymerisation (wie oben beschrieben) in einem Lösemittel durchgeführt. In der Monomermischung werden in der Regel mehr carboxylgruppenhaltige Monomere mitverwendet. Die anderen Parameter, die maßgeblich die Qualität der Poly(meth)acrylatbindemittel beeinflussen, wie Molekulargewicht, Molekulargewichtsverteilung, Härte bzw. Flexibilität des Polymers, Einführung von weiteren funktionellen Gruppen, können, müssen aber nicht variiert werden. In einem zweiten Schritt werden die Carboxylgruppen neutralisiert. Das Polymer wird wasserverdünnbar und kann in Wasser dispergiert werden.

Beschichtungen auf Wasserbasis enthalten in vielen Fällen, um Glanz, Verlauf und Filmbildung zu verbessern, geringe Mengen Lösemittel. Diese geringe Menge reicht jedoch in den meisten Fällen nicht aus, um die Polymerisation technisch zu beherrschen.

Daher entspricht es dem Stand der Technik, die Polymerisation in einer größeren Menge Lösemittel durchzuführen, welche nach der Polymerisation technisch aufwendig wieder abdestilliert werden muß (s. z.B. EP-A 358 979, EP-A 225 612, EP-A 521 919).

Bei der Suspensionspolymerisation werden wasserunlösliche Monomere durch wasserunlösliche Initiatoren in der 3- bis 4-fachen Menge Wasser unter intensivem Rühren polymerisiert. Die Polymerisation findet in Monomertröpfchen statt, die durch Schutzkolloide stabilisiert werden müssen. Die Suspensions-Polymerisation ist eine Art "wassergekühlte" Masse-Polymerisation. Man erhält Perlen von 0,1 - 1 mm Durchmesser. Die Suspensionen sind nicht ausreichend lagerstabil, die Schutzkolloide verschlechtern die Produkteigenschaften.

Ein großer Teil der im Bereich wasserverdünnbarer Bindemittel eingesetzten Poly(meth)acrylate werden nach dem Verfahren der Emulsionspolymerisation hergestellt. Wasserunlösliche Monomere werden mit Hilfe eines Emulgators in Wasser emulgiert und unter Zusatz eines wasserlöslichen Initiators zu stabilen Emulsionen polymerisiert.

Die Emulsionspolymerisation bietet eine Reihe verfahrenstechnischer Vorteile, wie z.B. die leichte Abführung der Polymerisationswärme. Verfahrensbedingt sind jedoch mit Lösungspolymerisaten vergleichbare niedrige Molekulargewichte nicht zu erzielen. Emulsionspolymerisate werden daher vornehmlich in Anwendungen eingesetzt, in denen eine schnelle physikalische Trocknung der Beschichtung angestrebt wird. Weniger geeignet sind dagegen für Beschichtungen, bei denen in Kombination mit einem Härter bei gutem Verlauf und Glanz eine hohe Wetter- und Chemikalienbeständigkeit erzielt werden soll. In diesen Anwendungen werden vornehmlich Sekundärdispersionen eingesetzt.

Die Aufgabe der Erfindung bestand darin, ein Verfahren zur Herstellung von lagerstabilen Poly(meth)acrylatsekundärdispersionen für Bindemittel oder Bindemittelkomponenten in wasserverdünnbaren Beschichtungsmitteln zu entwickeln, welches die aufgezeigten Nachteile des Standes der Technik nicht aufweist.

Gegenstand der Erfindung ist ein Verfahren zur Herstellung lagerstabiler Polyacrylatsekundärdispersionen mit einer OH-Zahl von 15 - 200 mg KOH/g Feststoff und einer Säurezahl von 5 - 55 mg KOH/g Feststoff, dadurch gekennzeichnet, dass man
A) 45 - 90 Gew.-% einer Mischung ethylenisch ungesättigter Monomerer
   mit
B) 0,5 - 5 Gew.-% eines in dem organischen Lösemittel C) löslichen Initiators
   in einem Gemisch aus
C) 2,5 - 20 Gew.-% eines organischen Lösemittels
   und
D) 5 - 45 Gew.-% Wasser
polymerisiert, wobei die Summe aus A), B), C) und D) 100 Gew.-% beträgt und wenigstens 40 % der neutralisationsfähigen Carboxylgruppen des erhaltenen Polyacrylatharzes durch Salzbildung neutralisiert wurden und, gegebenenfalls nach Zugabe einer weiteren Menge Wasser, das Polyacrylatharz dispergiert wird.

Es ist überraschend und war nicht vorhersehbar, dass die nach dem erfindungsgemäßen Verfahren hergestellten Polyacrylatsekundärdispersionen lagerstabil sind, obwohl in Gegenwart von Wasser polymerisiert wird und die zur Erzielung der Wasserverdünnbarkeit notwendige Säurezahl durch carboxygruppenfunktionelle und damit wasserlösliche Monomere erzielt wird.

Bei den Monomeren A) handelt es sich um Gemische aus insbesondere einfach ethylenisch ungesättigten Monomeren, wie beispielsweise Acrylsäure- oder Methacrylsäure-alkylester oder -cycloalkylester mit 1 bis 18, vorzugsweise 1 bis 8 Kohlenstoffatomen im Alkyl- bzw. Cycloalkylrest wie beispielsweise Methyl-, Ethyl-, n-Propyl-, n-Butyl-, Isopropyl-, Isobutyl-, t-Butyl-, die isomeren Pentyl-, Hexyl-, Octyl-, Dodecyl-, Hexadecyl- oder beispielsweise Octadecyl- oder Cyclohexyl- oder Trimethylcyclohexylester der genannten Säuren, Acetoacetoxyethylmethacrylat, Acrylnitril, Vinylether, Methacrylnitril, Vinylacetat, Styrol oder Vinyltoluol.

Mitverwendet werden außerdem ethylenisch ungesättigte Monomere, die alkoholische Hydroxygruppen tragen, wie beispielsweise Hydroxyalkylester α,β-ungesättigter Carbonsäuren, insbesondere von Acrylsäure oder Methacrylsäure mit 2 bis 12, vorzugsweise 2 bis 6 Kohlenstoffatomen im Hydroxyalkylrest, wie 2-Hydroxyethylacrylat, die isomeren, durch Anlagerung von 1 Mol Propylenoxid an 1 Mol Acrylsäure erhaltenen Hydroxypropylacrylate, 2- 3- und 4-Hydroxybutylacrylat, die isomeren Hydroxyhexylacrylate und die diesen Acrylaten entsprechenden Methacrylate. Ebenfalls geeignet sind mit Ethylen-, Propylen- und/oder Butylenoxid modifizierte bzw. kettenverlängerte, hydroxyfunktionelle Monomere eines Molekulargewichts von bis zu 376 g/mol. Die alkoholische Hydroxygruppen-tragenden Monomere werden dabei in einer solchen Menge im Gemisch A) eingesetzt, dass die OH-Zahl der Polyacrylatsekundärdispersion 15-200 mg KOH/g Feststoff beträgt.

Im Gemisch A) mitverwendet werden außerdem carboxylgruppenhaltige, ungesättigte Monomere wie beispielsweise Acrylsäure, Methacrylsäure, Maleinsäure, Itaconsäure, Crotonsäure, Halbester der Malein- und Fumarsäure, bevorzugt Acrylsäure oder Methacrylsäure. Die carboxylgruppenhaltigen Monomere werden dabei in einer solchen Menge eingesetzt, die einer Säurezahl der Polyacrylatsekundärdispersion von 5 - 55, bevorzugt 10 - 55, besonders bevorzugt 12 - 40 mg KOH/g Feststoff, entspricht.

Als Initiatoren B) geeignet sind alle in dem organischen Lösemittel C) löslichen Initiatoren, besonders organische Peroxide, wie Dibenzoylperoxid, tert.-Butylperoxy-2-ethylhexanoat, Di-tert-butylperoxid, Didecanoylperoxid, tert.-Butylperoxybenzoat, Dicumylperoxid oder Azoverbindungen, wie Azodiisobuttersäurenitril. Bevorzugt eingesetzt werden tert.-Butylperoxy-2-ethylhexanoat, tert.-Butylperoxybenzoat oder Di-tert-butylperoxid.

Zur Erzielung des gewünschten Molekulargewichts können Regler wie n-Dodecylmercaptan oder Mercaptoethanol in Mengen von bis zu 1 Gew.-% mitverwendet werden.

Als Lösemittel C) können Alkohole, wie z.B. n-Butanol, n-Pentanol, n-Hexanol, Cyclohexanol, Heptanol, Methylglykol, Ethylglykol, Butylglykol, Methoxypropanol, Ethoxypropanol, Butoxypropanol, Methyldiglykol, Ethyldiglykol, Butyldiglykol, Glykolsäuremethylester, Glykolsäureethylester, Glykolsäurebutylester, Milchsäuremethylester, Milchsäureethylester, Milchsäurebutylester und Mischungen dieser und anderer Lösungsmittel, wie z.B. n-Methylpyrrolidon, Solvent-Naphtha, Ethylcarbonat, Butylacetat, Xylol, Toluol, Cyclohexan, Diacetonalkohol, Methylisobutylketon, Aceton, sowie Mischungen der genannten Lösungsmittel verwendet werden. Besonders geeignet sind Butylglykol, Butoxypropanol, Butyldiglykol, Dimethyldiglykol und Solvent-Naphtha oder Mischungen dieser Lösemittel.

Die Copolymerisation wird im allgemeinen bei einer Temperatur von 80 bis 180°C, bevorzugt 105 - 170°C, besonders bevorzugt 115 - 160°C im Zulaufverfahren durchgeführt. Sie kann sowohl drucklos als auch bevorzugt im geschlossenen Kessel unter Druck erfolgen. Das Lösemittel C) und das Wasser D) werden im Reaktionskessel vorgelegt und auf Polymerisationstemperatur erwärmt. Die Monomermischung und gegebenenfalls ein Teil des Lösemittels C) werden parallel in einer solchen Geschwindigkeit zudosiert, daß über die gesamte Zeit eine ausreichende Kühlung der exothermen Reaktion gewährleistet ist. Nach Abschluß der Monomer- und Initiatordosierung kann eine geringe Menge Initiator nachdosiert werden, um den Restmonomergehalt im Polymerisationsansatz zu senken.

Es ist möglich, die Copolymerisation mehrstufig in der Art durchzuführen, daß das Monomergemisch A) in mehrere Teile unterschiedlicher Zusammensetzung geteilt wird, die nacheinander polymerisiert werden.

Nach Abschluß der Copolymerisation liegt der Anteil der wasserlöslichen Restmonomere im Polymerisationsansatz in der Regel unter 0,1 Gew.-%.

Das Verhältnis der zur Copolymerisation eingesetzten Komponenten beträgt 45 - 90 Gew.-%, bevorzugt 50 - 87 Gew.-% der Mischung ungesättigter Monomerer A), die mit 0,5 - 5 Gew.-% des in dem organischen Lösemittel C) löslichen Initiators B) in Gegenwart eines Gemisches aus 2,5 bis 20 Gew.-%, bevorzugt 2,5 - 15 Gew.-% des organischen Lösemittels oder Lösemittelgemisches C) und 5 - 45 Gew.-%, bevorzugt 10 - 40 Gew.% Wasser polymerisiert werden, wobei die Summe aus A), B), C) und D) 100 Gew.-% beträgt.

Die Säuregruppen werden durch anorganische Basen, wie z.B. Lithium- oder Kaliumhydroxid, durch Ammonik oder organische Amine neutralisiert. Bevorzugt sind organische Amine, wie N-Methylmorpholin, Trimethylamin, Triethylamin, Methyldiisopropylamin, Tripropylamin, Tributylamin, Dimethylcyclohexylamin, Diethanolamin, Triethanolamin, Dimethylisopropanolamin, Methyldiethanolamin, Diethylethanolamin, Dimethylethanolamin, Butanolamin, Dibutanolamin, Morpholin sowie Mischungen dieser Neutralisiationsmittel, gegebenenfalls mit anderen, auch höhermolemularen Ether- oder Estergruppen aufweisenden Aminen. Besonders bevorzugt sind Ammoniak, Triethylamin oder Dimethylethanolamin. In der wäßrigen Copolymerisatdispersion und nach Neutralisation hat man wenigstens 40 % der neutralisationsfähigen Carboxylgruppen durch Salzbildung neutralisiert, bevorzugt 70 bis 120 %. Die Zugabe des Neutralisationsmittels kann alleine oder zusammen mit dem gegebenenfalls noch zuzugebenden Wasser erfolgen.

Die Menge des gegebenenfalls noch zuzugebenden Wassers wird so gewählt, daß nach der Dispergierung des Polymerisationsansatzes der Festkörpergehalt der Dispersion über 35 Gew.-% bei einer Viskosität der Dispersion von 100 - 10.000, bevorzugt 500 - 5 000 mPa·s (23°C, D = 40) beträgt. Das gegebenenfalls noch zuzugebende Wasser kann entweder zum Polymerisationsansatz oder der Polymerisationsansatz zum Wasser gegeben werden.

Die nach dem erfindungsgemäßen Verfahren erhaltenen Polyacrylatsekundärdispersionen werden üblicherweise in Kombination mit Vernetzerharzen und gegebenenfalls Pigmenten und sonstigen in der Lackindustrie bekannten Hilfs- und Zusatzstoffen, wie Entschäumern, Verdickungs- und Verlaufsmitteln, Katalysatoren, Dispergierhilfs-, Hautverhinderungs-, Antiabsetzmitteln, Sikkativen und Emulgatoren eingesetzt.

Als Vernetzerharze eignen sich alle in der Beschichtungstechnologie üblichen Vernetzerharze, die mit Hydroxygruppen bei Raumtemperatur oder erhöhter Temperatur reagieren können, wie beispielsweise Phenolharze, Melaminharze, blockierte oder unblockierte Polyisocyanate. Es können auch Mischungen verschiedener Vernetzerharzer eingesetzt werden.

Die so erhaltenen Beschichtungsmittel eignen sich für alle Einsatzgebiete, in denen wasserverdünnbare Beschichtungssysteme mit erhöhtem Eigenschaftsprofil Verwendung finden. Genannt seien z.B. Grundierungen, Decklacke oder Klarlacke in den Bereichen der Holz-, Metall- oder Kunststoffbeschichtungen.

### Beispiele

Alle Angaben in % beziehen sich auf das Gewicht.

In allen Beispielen wurde unter Inertgas (Stickstoff) gearbeitet.

### Beispiel 1

In einem 5-1-Polymerisationskessel mit Rührer, zwei Vorlagebehältern mit Dosierpumpen und automatischer Temperatursteuerung werden 220 g Solvent-Naptha 100, 150 g Butylglykol und 630 g VE-Wasser eingewogen. Der Kessel wird allseitig geschlossen und auf 145°C ± 2°C aufgeheizt. Durch Kühlen bzw. Heizen wird diese Temperatur während der gesamten Polymerisation eingehalten.

Eine Mischung aus 575 g Styrol, 500 g Butylmethacrylat, 400 g Methylmethacrylat, 775 g Hydroxyethylmethacrylat und 125 g Acrylsäure wird in den Vorlagebehälter I gefüllt. In den Vorlagebehälter II werden 125 g Di-tert.-butylperoxid und 70 g Butylglykol eingewogen.

Die Monomermischung aus Vorlagebehälter I wird innerhalb von 3 Stunden gleichmäßig in den Kessel dosiert. Mit der Zudosierung der Initiatormischung aus Vorlagebehälter II wird gleichzeitig mit der Monomermischung begonnen. Die Gesamtdosierzeit der Initiatormischung beträgt 3,5 Stunden.

Während der Polymerisation baut sich im Kessel ein Kesselinnendruck von 4,7 bar auf. Nach Beendigung der Zudosierung wird der Polymerisationsansatz weitere 2,0 Stunden bei 145°C nachgerührt, danach auf 90°C abgekühlt.

Zum Harz werden 77,3 g Dimethylethanolamin gegeben und die Mischung 30 Minuten homogenisiert.

In der Zwischenzeit werden in einem Lösekessel 2 989 g VE-Wasser vorgelegt und auf 50°C erwärmt. Das Polymerisationsharz wird zugepumpt und die Mischung unter Rühren bei 70°C dispergiert. Die Dispersion wird auf unter 40°C abgekühlt und durch einen KoOO-Filter filtriert.

Die Dispersion hat eine Säurezahl von 41 mg KOH/g Festharz, eine OH-Zahl von 132 mg KOH/g Festharz, eine Viskosität von 1 230 mPa·s (23°C, D = 40), einen pH-Wert von 7,5 und einen Festkörpergehalt von 37 %.

### Beispiel 2

In einem 5-1-Polymerisationskessel mit Rührer, zwei Vorlagebehältern mit Dosierpumpen und automatischer Temperatursteuerung werden 200 g Butylglykol und 800 g VE-Wasser eingewogen. Der Kessel wird allseitig geschlossen und auf 140°C ± 2°C aufgeheizt. Durch Kühlen bzw. Heizen wird diese Temperatur während der gesamten Polymerisation eingehalten.

Eine Mischung aus 625 g Butylmethacrylat, 375 g Methylmethacrylat, 500 g Butylacrylat, 750 g Hydroxypropylmethacrylat und 150 g Acrylsäure wird in den Vorlagebehälter I gefüllt. In den Vorlagebehälter II werden 100 g Di-tert.-butylperoxid und 70 g Butylglykol eingewogen.

Die Monomermischung aus Vorlagebehälter I wird innerhalb von 3 Stunden gleichmäßig in den Kessel dosiert. Mit der Zudosierung der Initiatormischung aus Vorlagebehälter II wird gleichzeitig mit der Monomermischung begonnen. Die Gesamtdosierzeit der Initiatormischung beträgt 3,5 Stunden.

Während der Polymerisation baut sich im Kessel ein Kesselinnendruck von 3,7 bar auf. Nach Beendigung der Zudosierung wird der Polymerisationsansatz weitere 2,0 Stunden bei 145°C nachgerührt, danach auf 90°C abgekühlt.

Zum Harz werden 93 g Dimethylethanolamin gegeben und die Mischung 30 Minuten homogenisiert.

In der Zwischenzeit werden in einem Lösekessel 3 110 g VE-Wasser vorgelegt und auf 50°C erwärmt. Das Polymerisationsharz wird zugepumpt und die Mischung unter Rühren bei 70°C dispergiert. Die Dispersion wird auf unter 40°C abgekühlt und durch einen KoOO-Filter filtriert.

Die Dispersion hat eine Säurezahl von 50 mg KOH/g Festharz, eine OH-Zahl von 117 mg KOH/g Festharz, eine Viskosität von 1 790 mPa·s (23°C, D = 40), einen pH-Wert von 7,3 und einen Festkörpergehalt von 37 %.

### Beispiel 3

In einem 5-1-Polymerisationskessel mit Rührer, zwei Vorlagebehältem mit Dosierpumpen und automatischer Temperatursteuerung werden 130 g Solvent-Naphtha 100 und 870 g VE-Wasser eingewogen. Der Kessel wird allseitig geschlossen und auf 145°C ± 2°C aufgeheizt. Durch Kühlen bzw. Heizen wird diese Temperatur während der gesamten Polymerisation eingehalten.

Eine Mischung aus 575 g Methylmethacrylat, 417,5 g Butylacrylat, 567,5 g Hydroxyethylacrylat wird in den Vorlagebehälter I gefüllt. In den Vorlagebehälter II werden 49,5 g Di-tert.-butylperoxid und 39 g Solvent-Naphtha 100 eingewogen.

Die Monomermischung aus Vorlagebehälter I und die Initiatormischung aus Vorlagebehälter II werden innerhalb von 2,5 Stunden gleichmäßig in den Kessel dosiert.

Nach Beendigung der Zudosierung wird eine Mischung aus 287,5 g Methylmethacrylat, 207,5 g Butylacrylat, 282,5 g Hydroxyethylacrylat und 75 g Acrylsäure in den Vorlagebehälter I gefüllt. In den Vorlagebehälter II werden 38 g Di-tert.-butylperoxid und 31 g Solvent Naphtha 100 eingewogen.

Die Monomermischung aus Vorlagebehälter I wird innerhalb von 1,5 Stunden gleichmäßig in den Kessel zudosiert. Mit der Zudosierung der Initiatormischung aus Vorlagebehälter II wird gleichzeitig mit der Monomermischung begonnen. Die Gesamtdosierzeit der Initiatormischung beträgt 2 Stunden.

Während der Polymerisation baut sich im Kessel ein Kesselinnendruck von 5,0 bar auf. Nach Beendigung der Zudosierung wird der Polymerisationsansatz weitere 2,0 Stunden bei 145°C nachgerührt, danach auf 90°C abgekühlt.

Zum Harz werden 88 g Dimethylethanolamin gegeben und die Mischung 30 Minuten homogenisiert.

In der Zwischenzeit werden in einem Lösekessel 2 900 g VE-Wasser vorgelegt und auf 50°C erwärmt. Das Polymerisationsharz wird zugepumpt und die Mischung unter Rühren bei 70°C dispergiert. Die Dispersion wird auf unter 40°C abgekühlt und durch einen KoOO-Filter filtriert.

Die Dispersion hat eine Säurezahl von 33 mg KOH/g Festharz, eine OH-Zahl von 165 mg KOH/g Festharz, eine Viskosität von 500 mPa·s, einen pH-Wert von 7,9 und einen Festkörpergehalt von 40 %.

## Patentansprüche

1. Verfahren zur Herstellung von Polyacrylatsekundärdispersionen mit einer OH-Zahl von 15 - 200 mg KOH/g Feststoff und einer Säurezahl von 5 - 55 mg KOH/g Feststoff, **dadurch gekennzeichnet, dass** man
A) 45 - 90 Gew.-% einer Mischung ethylenisch ungesättigter Monomerer
mit
B) 0,5 - 5 Gew.-% eines in dem organischen Lösemittel C) löslichen Initiators
in einem Gemisch aus
C) 2,5 - 20 Gew.-% eines organischen Lösemittel oder Lösemittelgemisches
und
D) 5 - 45 Gew.-% Wasser
polymerisiert, wobei die Summe aus A), B), C) und D) 100 Gew.-% beträgt und wenigstens 40 % der neutralisationsfähigen Carboxylgruppen des erhaltenen Polyacrylatharzes durch Salzbildung neutralisiert wurden und, gegebenenfalls nach Zugabe einer weiteren Menge Wasser, das Polyacrylatharz dispergiert wird.

2. Verfahren zur Herstellung einer Polyacrylatsekundärdispersion nach Anspruch 1, **dadurch gekennzeichnet, dass** man
A) 50 - 87 Gew.-% einer Mischung ethylenisch ungesättigter Monomerer
mit
B) 0,5 - 5 Gew.-% eines in dem organischen Lösemittel oder Lösemittelgemisch C), löslichen Initiators
in einem Gemisch aus
C) 2,5 - 15 Gew.-% eines organischen Lösemittel oder Lösemittelgemisches
und
D) 10 - 40 Gew.-% Wasser
polymerisiert, wobei die Summe aus A), B), C) und D) 100 Gew.-% beträgt und wenigstens 40 % der neutralisationsfähigen Carboxylgruppen des erhaltenen Polyacrylatharzes durch Salzbildung neutralisiert wurden und, gegebenenfalls nach Zugabe einer weiteren Menge Wasser, das Polyacrylatharz dispergiert wird.

3. Verfahren nach Anspruch 1, **dadurch gekennzeichnet, dass** der organisch lösliche Initiator B ein organisches Peroxid ist.

4. Verfahren nach Anspruch 1, **dadurch gekennzeichnet, dass** die Polymerisation bei einer Temperatur zwischen 105 und 170°C durchgeführt wird.

## Claims

1. Process for preparing polyacrylate secondary dispersions having an OH number of 15 - 200 mg KOH/g solids and an acid number of 5 - 55 mg KOH/g solids, **characterized in that**
A) 45 - 90% by weight of a mixture of ethylenically unsaturated monomers is polymerized with
B) 0.5 - 5% by weight of an initiator soluble in the organic solvent C)
in a mixture of
C) 2.5 - 20% by weight of an organic solvent or solvent mixture
and
D) 5 - 45% by weight of water,
the sum of A), B), C) and D) being 100% by weight and at least 40% of the neutralizable carboxyl groups of the resultant polyacrylate resin having been neutralized by salt formation, and the polyacrylate resin, where appropriate following addition of a further quantity of water, is dispersed.

2. Process for preparing a polyacrylate secondary dispersion according to Claim 1, **characterized in that**
A) 50 - 87% by weight of a mixture of ethylenically unsaturated monomers is polymerized with
B) 0.5 - 5% by weight of an initiator soluble in the organic solvent C)
in a mixture of
C) 2.5 - 15% by weight of an organic solvent or solvent mixture
and
D) 10 - 40% by weight of water,
the sum of A), B), C) and D) being 100% by weight and at least 40% of the neutralizable carboxyl groups of the resultant polyacrylate resin having been neutralized by salt formation, and the polyacrylate resin, where appropriate following addition of a further quantity of water, is dispersed.

3. Process according to Claim 1, **characterized in that** the organic-soluble initiator B is an organic peroxide.

4. Process according to Claim 1, **characterized in that** the polymerization is conducted at a temperature of between 105 and 170°C.

## Revendications

1. Procédé pour la préparation de dispersions secondaires de polyacrylates avec un indice OH de 15-200 mg de KOH/g de matière solide et un indice acide de 5-55 mg de KOH/g de matière solide, **caractérisé en ce que** l'on polymérise
A) 45-90 % en poids d'un mélange de monomères éthyléniquement insaturés
avec
B) 0,5-5 % en poids d'un initiateur soluble dans le solvant organique C)
dans un mélange constitué
C) de 2,5-20 % en poids d'un solvant ou d'un mélange de solvants organiques
et
D) de 5-45 % en poids d'eau
la somme de A), B), C) et D) étant de 100 % en poids et au moins 40 % des groupes carboxyle pouvant être neutralisés de la résine de polyacrylate obtenue ayant été neutralisés par formation de sel et la résine de polyacrylate étant éventuellement dispersée après addition d'une autre quantité d'eau.

2. Procédé pour la préparation d'une dispersion secondaire de polyacrylate selon la revendication 1, **caractérisé en ce que** l'on polymérise
A) 50-87 % en poids d'un mélange de monomères éthyléniquement insaturés
avec
B) 0,5-5 % en poids d'un initiateur soluble dans le solvant organique ou dans un mélange de solvants C)
dans un mélange constitué
C) de 2,5-15 % en poids d'un solvant organique ou d'un mélange de solvants
et
D) de 10-40 % en poids d'eau
la somme de A), B), C) et D) étant de 100 % en poids et au moins 40 % des groupes carboxyle pouvant être neutralisés de la résine de polyacrylate obtenue ayant été neutralisés par formation de sel et la résine de polyacrylate ayant été éventuellement dispersée après addition d'une autre quantité d'eau.

3. Procédé selon la revendication 1, **caractérisé en ce que** l'initiateur organiquement soluble B) est un peroxyde organique.

4. Procédé selon la revendication 1, **caractérisé en ce que** la polymérisation est réalisée à une température comprise entre 105 et 170°C.
